# EUROPÄISCHE PATENTSCHRIFT

(11) **EP 3 669 385 B1**
(45) Veröffentlichungstag und Bekanntmachung des Hinweises auf die Patenterteilung: **21.04.2021**
(21) Anmeldenummer: 18753404.5
(22) Anmeldetag: 10.08.2018
(51) Int. Cl.: H01F 7/16, H01F 7/18, G05B 19/042

(54) **VERFAHREN ZUR EINSTELLUNG DES ANZUGSVERHALTENS EINES ELEKTROMAGNETISCHEN FEEDBACK-AKTUATORS**
METHOD FOR SETTING THE ATTRACTIVE BEHAVIOUR OF AN ELECTROMAGNETIC FEEDBACK ACTUATOR
PROCÉDÉ DE RÉGLAGE DU COMPORTEMENT D'ATTRACTION D'UN ACTIONNEUR DE RÉTROACTION ÉLECTROMAGNÉTIQUE

(30) Priorität: 19.08.2017 DE 102017007896
(43) Veröffentlichungstag der Anmeldung: 24.06.2020
(73) Patentinhaber: KOSTAL Automobil Elektrik GmbH & Co. KG, 58513 Lüdenscheid (DE)
(72) Erfinder: SEIFERT, Matthias, 44789 Bochum (DE); KLAGGES, Daniel, 58454 Witten (DE); SCHMIDT, Michael, 58513 Lüdenscheid (DE); BLECKMANN, Michael, 58239 Schwerte-Ergste (DE)
(74) Vertreter: Kerkmann, Detlef
(86) Internationale Anmeldenummer: PCT/EP2018/071748
(87) Internationale Veröffentlichungsnummer: WO 2019/038106

(56) Entgegenhaltungen:
- DE-B3-102016 101 556
- US-A- 5 942 892
- US-B1- 6 373 678

## Beschreibung

Die Erfindung betrifft ein Verfahren zur Einstellung des Anzugsverhaltens eines elektromagnetischen Feedback-Aktuators, wobei der elektromagnetische Feedback-Aktuator einen durch mindestens einen Elektromagneten gegen eine Federkraft bewegbaren Magnetanker aufweist, und wobei die Position des Magnetankers in der Nähe jedes Elektromagneten durch jeweils einen Positionssensor erfasst werden kann, und wobei eine Ansteuervorrichtung mit einem Mikrocontroller den mindestens einen Elektromagneten ansteuert und die Ausgangssignale des mindestens einen Positionssensors einliest.

Ein derartiges Verfahren ist aus der Druckschrift US 6 373 678 B1 bekannt. Aus diesem Dokument ist zudem ein Verfahren zur Bestimmung des Zusammenhangs zwischen angewandtem Strom und Ankerposition, das heißt zur Kalibrierung der Ankerposition in Bezug auf den angewandten Strom bekannt. Die Kalibrierungsdaten werden in einem Datenspeicher der Ansteuervorrichtung gespeichert. Das Dokument lehrt zudem, dass diese Bestimmung entweder empirisch oder durch eine Berechnung erfolgen kann.

Die Druckschrift US 5 942 892 A beschreibt einen Controller eines Feedback Aktuators mit einem Magnetanker, der eine vorgegebene Look-Up-Tabelle zur Bestimmung der Ankerposition benutzt.

Viele, beispielsweise in Kraftfahrzeugen, aktuell eingesetzte Bedienelemente weisen elektronische Sensoren auf, die entweder auf eine bloße Berührung oder auf eine Krafteinwirkung reagieren. Im Gegensatz zu vielen mechanischen Bedienelementen, bei denen zur Betätigung eine Kraftschwelle überwunden werden muss, ist die wirksame Betätigung solcher Sensoren oftmals haptisch nicht erkennbar. Eine fehlende Rückmeldung bei der Betätigung eines Bedienelements wirkt aber oftmals irritierend und damit unkomfortabel auf einen Benutzer.

Daher wird bei vielen elektronischen Sensoren, die durch Berührung oder eine Druckkrafteinwirkung betätigbar sind, eine haptikerzeugende Vorrichtung hinzugefügt, die eine die Betätigung quittierende Rückmeldung erzeugt. Eine solche Funktion wird oftmals als Aktivhaptik und die sie bewirkende Vorrichtung als Feedback-Aktuator bezeichnet.

Ein gängiges Realisierungsprinzip eines Feedback-Aktuator besteht darin, einen Elektromagneten vorzusehen, der bestromt einen Magnetanker anzieht, welcher einen spürbaren Kraftimpuls auf ein Bedienelement überträgt.

Problematisch ist die starke Abhängigkeit der durch den Elektromagneten erzeugten Kraft von der Größe des Luftspalts zwischen dem Elektromagneten und dem Magnetanker. Dieser Abstand unterliegt mechanischen Toleranzen aufgrund von Montage- oder Umwelteinflüssen und beeinflusst den Arbeitspunkt des jeweiligen Feedback-Aktuators und damit auch die durch diesen erzeugte Haptik. Dieses ist besonders dann ungünstig, wenn eine Vorrichtung mehrere Feedback-Aktuatoren aufweist, die aufgrund solcher Toleranzen verschiedenartig wirkende haptische Rückmeldungen erzeugen.

Aufgabe der Erfindung war es, die Auswirkungen von Toleranzen bei elektromagnetischen Feedbackaktuatoren zu kompensieren und so eine möglichst immer gleich wirkende Haptik zu erreichen.

Diese Aufgabe wird erfindungsgemäß durch das im Anspruch 1 beschriebene Verfahren gelöst.

Das Verfahren sieht vor, vor der Verwendung eines Feedback-Aktuators dessen Ansteuerstrom auf einen Wert zu kalibrieren, der einer vorgesehenen Haptik entspricht. Im Falle von mehreren vorhandenen Feedback-Aktuatoren wird so auch eine weitgehend einheitliche Haptik erreicht.

Diese Kalibrierung kann entweder einmalig oder auch regelmäßig wiederholt ausgeführt werden. Ist ein Feedback-Aktuator beispielsweise Bestandteil eines Bedienelements in einem Kraftfahrzeug, so kann die Kalibrierung entweder einmalig bei der Erstmontage des Bedienelements, oder alternativ auch bei jedem Fahrzeugstart erneut ausgeführt werden. Letzteres Vorgehen hat den Vorteil, dass dadurch auch umwelt- und alterungsbedingte Einflüsse auf die Haptik kompensiert werden können.

Erfindungsgemäß vorgesehen ist zudem, dass eine Einschwingzeit des Magnetankers vom Beginn der Ansteuerung des/der Elektromagneten bis zum Erreichen eines stationären Zustands erfasst wird.

Dadurch kann neben dem optimalen Betrag zusätzlich auch der optimale zeitliche Verlauf eines Ansteuerstroms durch Berechnung oder Auslesen aus einer gespeicherten Tabelle in Abhängigkeit vom erfassten konstanten Positionswert und der erfassten Einschwingzeit ermittelt und danach zur Ansteuerung von Feedbackaktuatoren eingesetzt werden.

Die vorgeschlagene Art der Kompensation ermöglicht es dabei vorteilhafterweise, neben unterschiedlichen Luftspaltgrößen zugleich andere, beispielsweise durch Reibung bedingte Systemtoleranzen zu kompensieren.

Das erfindungsgemäße Verfahren soll nachfolgend anhand der Zeichnung dargestellt und näher erläutert werden. Es zeigen
- Figur 1: eine schematisch dargestellte haptikerzeugende Anordnung mit einem Feedback-Aktuator,
- Figur 2: eine Anordnung mit zwei Feedback-Aktuatoren und einem Bedienelement nach einem nicht vorveröffentlichten Stand der Technik.

Da haptikerzeugende Vorrichtungen mit elektromagnetischen Feedback-Aktuatoren unterschiedlich komplexe Ausgestaltungen aufweisen können, soll unter einem Feedback-Aktuator hier speziell eine Vorrichtung verstanden werden, die einen oder auch mehrere Elektromagnete aufweist, die einzeln oder gemeinsam mittels Magnetkraft auf ein ferromagnetisches Element, das hier kurz als Magnetanker oder Ankerplatte bezeichnet wird, einwirken und dessen Position relativ zu dem oder den Elektromagneten verändern können.

Der Magnetanker ist dazu entweder federnd gelagert oder wirkt selbst als Federelement, indem er beispielsweise in Form einer Biegefeder ausgebildet ist. Ortsnah zu jedem Elektromagneten befindet sich ein Positionssensor, mit dessen Hilfe eine Bewegung des Magnetankers erfasst werden kann. Die Bewegungen des Magnetankers bewirken haptisch erkennbare Signalisierungen beispielsweise an Betätigungselementen von Schaltern oder sonstigen Bedienelementen.

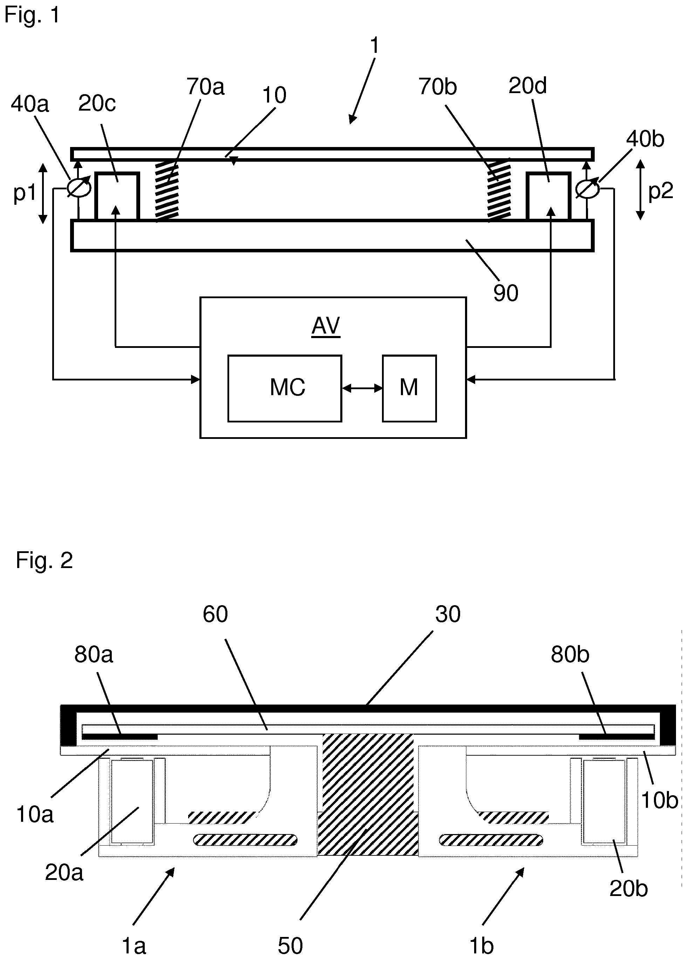

Die Funktionsweise von solchen Feedbackaktuatoren soll zunächst anhand der Figur 2 rein beispielhaft erläutert werden. Diese zeigt eine Anordnung mit zwei Feedback-Aktuatoren, die im Detail in der nicht vorveröffentlichten deutschen Patentanmeldung DE 10 2016 005 926 dargestellt und beschrieben ist.

Die beiden Feedback-Aktuatoren 1a, 1b sind seitlich an einem Sockel 50 derart montiert, dass die freien Endabschnitte ihrer Ankerplatten 10a, 10b sich in Richtung vom Sockel 50 weg erstrecken. Auf der Oberseite des Sockels 50 ist eine Leiterplatte 60 befestigt, die die Ankerplatten 10a, 10b beider Feedback-Aktuatoren 1a, 1b unter Ausbildung eines Zwischenraums fast vollständig überdeckt.

Auf der den Ankerplatten 10a, 10b zugewandten Seite der Leiterplatte 60 ist jeweils an deren Endabschnitten auf der Leiterplatte 60 eine Sensorfläche 80a, 80b aufgebracht, welche Abstandsänderungen zur jeweiligen Ankerplatte 10a, 10b auf kapazitivem oder induktivem Wege erfassen kann.

Mit den freien Enden der Ankerplatten 10a, 10b ist jeweils ein Randabschnitt eines flächenhaften Bedienelementes 30 gekoppelt. Bereits durch eine geringe Krafteinwirkung auf die Oberfläche des Bedienelements 30 kann eine vertikale Auslenkung einer Ankerplatte 10a, 10b bewirkt werden, die durch die zugehörige Sensorfläche 80a, 80b erfasst wird. Die von einer Sensorfläche 80a, 80b erfolgende elektrische Signalisierung wir durch eine hier nicht dargestellte Elektronik ausgewertet, die daraufhin eine vorgesehene Schaltfunktion auslöst. Darüber hinaus bestromt die Elektronik den Elektromagneten des zur ausgelenkten Ankerplatte 10a, 10b gehörenden Feedback-Aktuators 1a, 1b, so dass dessen Ankerplatte 10a, 10b vom Elektromagneten angezogen wird und der jeweilige Feedback-Aktuator 1a, 1b eine haptische Rückmeldung zur erfolgten Betätigung erzeugt.

Bei einer Krafteinwirkung in der Mitte des Bedienelements 30, also etwa oberhalb des Sockels 50, werden beide Ankerplatten 10a, 10b ungefähr gleichzeitig ausgelenkt, wodurch auch durch beide Feedback-Aktuatoren 1a, 1b zugleich eine haptische Rückmeldung erfolgt. Es ergeben sich somit für diese Anordnung insgesamt drei, auch haptisch gut unterscheidbare Betätigungsmöglichkeiten.

Das nachfolgend beschriebene Verfahren löst das Problem, dass die von verschiedenen Feedbackaktuatoren erzeugten Schalthaptiken aufgrund kleiner toleranzbedingter Unterschiede deutlich unterschiedlich ausfallen können. Diese Unterschiede betreffen insbesondere den Abstand zwischen dem Kern des Elektromagneten 20a, 20b und der jeweils zugehörigen Ankerplatte 10a, 10b.

Um die daraus resultierende Haptikunterschiede soweit wie möglich auszugleichen, ist vorgesehen, die den Elektromagneten 20a, 20b zugeführten Stromimpulse derart anzupassen, dass der jeweils angesteuerte Elektromagnet 20a, 20b einen jeweils einheitlichen Kraftimpuls erzeugt.

Dieses wird dadurch erreicht, dass vor der eigentlichen Verwendung eines Feedbackaktuators eine Kalibrierung des diesen betätigenden Ansteuerimpulses erfolgt, was nachfolgend anhand der Figur 1 erläutert werden soll.

Die Figur 1 zeigt eine Anordnung mit einem Feedback-Aktuator 1 in einer schematisierten Darstellung. Im Unterschied zu der in der Figur 2 dargestellten Anordnung wirken in der Figur 1 zwei Elektromagnete 20c, 20d auf einen Magnetanker 10 ein und bilden somit einen einzigen Feedback-Aktuator 1 aus. Auch bei dieser Anordnung ist es sinnvoll, das Anzugsverhalten der beiden Elektromagneten 20c, 20d durch eine Kalibrierung einander anzugleichen. Das nachfolgend beschriebene Verfahren eignet sich aber selbstverständlich ebenfalls für eine Kalibrierung des Anzugsverhaltens mehrerer Feedbackaktuatoren 1a, 1b, etwa bei der Anordnung gemäß der Figur 2.

Wie bereits ausgeführt, zeigt die Figur 1 einen Feedback-Aktuator 1, bei dem zwei Elektromagnete 20c, 20d auf einen Magnetanker 10 einwirken können. Die Elektromagnete 20c, 20d sind auf einer gemeinsamen Grundplatte 90 angeordnet. Relativ zu dieser Grundplatte 90 ist der Magnetanker 10 federnd gelagert, was durch zwei Federn 70a, 70b angedeutet ist.

In der Nähe jedes Elektromagneten 20c, 20d ist ein Positionssensor 40a, 40b angeordnet, der die Position des Magnetankers 10, beispielsweise relativ zur Grundplatte 90 erfasst. Die jeweils erfassten Positionen des Magnetankers 10 beziehen sich dabei natürlich jeweils auf den Ort des messenden Positionssensor 40a, 40b und damit auch in guter Näherung auf den Ort des daneben angeordneten Elektromagneten 20c, 20d. Die Positionssensoren 40a, 40b können dabei auch, wie in der Figur 2 skizziert, durch ortsfest angeordnete Sensorflächen 80a, 80b ausgebildet sein.

Die von den Positionssensoren 40a, 40b erzeugten Sensorsignale werden durch eine Ansteuervorrichtung AV erfasst, welche unter anderem einen Mikrocontroller MC und einen Datenspeicher M aufweist. Die Ansteuervorrichtung AV kann zudem die Elektromagnete 20c, 20d mit Stromimpulsen ansteuern, wobei der Stärke und Dauer dieser Stromimpulse durch den Mikrocontroller MC vorgegeben werden.

Zur Einstellung des Anzugsverhaltens und damit der Haptik des elektromagnetischen Feedback-Aktuators 1 ist eine Kalibrierung der Ansteuerimpulse der Elektromagnete 20c, 20d vorgesehen. Die Kalibrierung der Ansteuerimpulse erfolgt dadurch, dass zunächst die Ausgangspositionen des Magnetankers 10 durch die Positionssensoren 40a, 40b erfasst werden. Danach steuert die Ansteuervorrichtung AV für einen festgelegten Zeitraum in der Größenordnung von zehn Millisekunden die beiden Elektromagnete 20c, 20d jeweils mit einem konstanten Stromimpuls bekannter Stromstärke an.

Währenddessen werden die Signale der Positionssensoren 40a, 40b immer wieder durch die Ansteuervorrichtung AV eingelesen, bis der Mikrocontroller MC feststellt, dass sich für den Magnetanker 10 ein stationärer Zustand mit lokal jeweils konstanten Positionswerten p1, p2 eingestellt hat. Als Differenz zu den zuvor erfassten Ausgangspositionen des Magnetankers 10 ergibt sich aus den Positionswerten p1, p2 jeweils ein durch die Stromimpulse bewirkter Ankerhub.

Zu den so bestimmten Ankerhüben ermittelt der Mikrocontroller MC durch eine Berechnung oder durch Auslesen aus gespeicherten tabellierten Daten einen optimierten Ansteuerstrom für jeden Elektromagneten 20c, 20d, der einer gewünschten Haptik des Feedback-Aktuators 1 entspricht.

Der Wert des so ermittelten optimierten Ansteuerstroms für jeden Elektromagneten 20c, 20d wird in dem Datenspeicher M abgelegt und bei nachfolgend stattfindende Ansteuerungen des/der jeweiligen Elektromagneten 20c, 20d aus dem Datenspeicher M ausgelesen und als Vorgabewert für den Ansteuerstrom des/der jeweiligen Elektromagneten 20c, 20d verwendet.

Bezugszeichen
- 1, 1a, 1b: Feedback-Aktuator
- 10, 10a, 10b: Magnetanker, Ankerplatte
- 20a, 20b, 20c, 20d: Elektromagnet
- 30: Bedienelement
- 40a, 40b: Positionssensor
- 50: Sockel
- 60: Leiterplatte
- 70a, 70b: Federn
- 80a, 80b: Positionssensor (Sensorflächen)
- 90: Grundplatte

- AV: Ansteuervorrichtung
- MC: Mikrocontroller
- M: Datenspeicher
- p1, p2: Positionswerte

## Patentansprüche

1. Verfahren zur Einstellung des Anzugsverhaltens eines elektromagnetischen Feedback-Aktuators (1, 1a, 1b),
wobei der elektromagnetische Feedback-Aktuator (1, 1a, 1b) einen durch mindestens einen Elektromagneten (20a, 20b, 20c, 20d) gegen eine Federkraft bewegbaren Magnetanker (10, 10a, 10b) aufweist, und wobei die Position des Magnetankers (10, 10a, 10b) in der Nähe jedes Elektromagneten (20a, 20b, 20c, 20d) durch jeweils einen Positionssensor (40a, 40b, 80a, 80b) erfasst werden kann, und
wobei eine Ansteuervorrichtung (AV) mit einem Mikrocontroller (MC) den mindestens einen Elektromagneten (20a, 20b, 20c, 20d) ansteuert und die Ausgangssignale des mindestens einen Positionssensors (40a, 40b, 80a, 80b) einliest,
**aufweisend folgende Verfahrensschritte:**
- Erfassung von jeweils einer Ausgangsposition des Magnetankers (10, 10a 10b) durch den mindestens einen Positionssensor (40a, 40b, 80a, 80b),
- Beginn der Ansteuerung des/der Elektromagneten (20a, 20b, 20c, 20d) mit einem konstanten Strom,
- wiederholtes Erfassen der jeweiligen Position(en) des Magnetankers (10, 10a 10b) mittels des mindestens einen Positionssensor (40a, 40b, 80a, 80b) bis sich jeweils ein konstanter Positionswert (p1, p2) als stationärer Zustand eingestellt hat,
- wobei zusätzlich eine Einschwingzeit vom Beginn der Ansteuerung des Elektromagneten (20a, 20b, 20c, 20d) bis zu Erreichen des stationären Zustands erfasst wird,
- Beendigung der Ansteuerung des Elektromagneten (20a, 20b, 20c, 20d),
- Berechnung des durch jeden Elektromagneten (20a, 20b, 20c, 20d) bewirkten Ankerhubs als Positionsänderung zwischen der jeweiligen Ausgangsposition und dem jeweiligen konstanten Positionswert (p1, p2) des Magnetankers (10, 10a 10b),
- Bestimmung des Werts eines optimierten Ansteuerstroms für jeden Elektromagneten (20a, 20b, 20c, 20d) durch eine von der Ansteuervorrichtung (AV) ausgeführte Berechnung oder durch Auslesen aus einer gespeicherten Tabelle in Abhängigkeit vom erfassten Ankerhub,
- Einspeichern des Werts des optimierten Ansteuerstroms für den/die Elektromagneten (20a, 20b, 20c, 20d) in einen Datenspeicher (M) der Ansteuervorrichtung (AV).

2. Verfahren nach Anspruch 1, wobei der zeitliche Verlauf eines optimierten Ansteuerstroms durch Berechnung oder Auslesen aus einer gespeicherten Tabelle in Abhängigkeit vom ermittelten Ankerhub und der erfassten Einschwingzeit bestimmt wird.

3. Verfahren nach Anspruch 1, wobei das Verfahren bei Herstellung oder Erstmontage des Feedback-Aktuators (1) durchgeführt wird.

4. Verfahren nach Anspruch 1, wobei der Feedback-Aktuator (1) in einem Kraftfahrzeug verwendet wird und das Verfahren bei jedem Fahrzeugstart durchgeführt wird.

## Claims

1. Method of adjusting the tightening behaviour of an electromagnetic feedback actuator (1, 1a, 1b),
wherein the electromagnetic feedback actuator (1, 1a, 1b) has a magnet armature (10, 10a 10b) movable against a spring force by at least one electromagnet (20a, 20b, 20c, 20d), and wherein the position of the magnet armature (10, 10a 10b) in the vicinity of each electromagnet (20a, 20b, 20c, 20d) can be detected by a respective position sensor (40a, 40b, 80a, 80b), and
wherein a drive device (AV) with a microcontroller (MC) drives the at least one electromagnet (20a, 20b, 20c, 20d) and reads in the output signals of the at least one position sensor (40a, 40b, 80a, 80b),
comprising the following method steps:
- Detecting a respective output position of the magnetic armature (10, 10a 10b) by the at least one position sensor (40a, 40b, 80a, 80b),
- starting to drive the electromagnet(s) (20a, 20b, 20c, 20d) with a constant current,
- repeated detection of the respective position(s) of the magnet armature (10, 10a 10b) by means of the at least one position sensor (40a, 40b, 80a, 80b) until in each case a constant position value (p1, p2) has been set as a stationary state,
- wherein a settling time from the start of the activation of the electromagnet (20a, 20b, 20c, 20d) until the stationary state is reached is additionally detected,
- termination of the driving of the electromagnet (20a, 20b, 20c, 20d),
- calculating the armature stroke caused by each electromagnet (20a, 20b, 20c, 20d) as a change in position between the respective initial position and the respective constant position value (p1, p2) of the magnet armature (10, 10a 10b),
- determining the value of an optimized drive current for each solenoid (20a, 20b, 20c, 20d) by a calculation performed by the drive device (AV) or by reading out from a stored table as a function of the detected armature stroke,
- storing the value of the optimized drive current for the electromagnet(s) (20a, 20b, 20c, 20d) in a data memory (M) of the drive device (AV).

2. Method according to claim 1, wherein the time characteristic of an optimized drive current is determined by calculation or reading out from a stored table as a function of the determined armature stroke and the detected transient time.

3. Method according to claim 1, wherein the method is carried out during manufacture or initial assembly of the feedback actuator (1).

4. Method according to claim 1, wherein the feedback actuator (1) is used in a motor vehicle and the method is performed at each vehicle start.

## Revendications

1. Méthode de réglage du comportement de serrage d'un actionneur à rétroaction électromagnétique (1, 1a, 1b), dans lequel l'actionneur à rétroaction électromagnétique (1, 1a, 1b) comporte une armature d'aimant (10, 10a, 10b) mobile à l'encontre d'une force de ressort par au moins un électroaimant (20a, 20b, 20c, 20d), et dans lequel la position de l'armature d'aimant (10, 10a, 10b) au voisinage de chaque électroaimant (20a, 20b, 20c, 20d) peut être détectée par un capteur de position respectif (40a, 40b, 80a, 80b), et dans lequel un dispositif d'entraînement (AV) avec un microcontrôleur (MC) entraîne le au moins un électroaimant (20a, 20b, 20c, 20d) et lit les signaux de sortie du au moins un capteur de position (40a, 40b, 80a, 80b),
comprenant les étapes suivantes de la méthode :
- Détection d'une position de sortie respective de l'armature magnétique (10, 10a 10b) par le ou les capteurs de position (40a, 40b, 80a, 80b),
- en commençant à alimenter le ou les électroaimants (20a, 20b, 20c, 20d) avec un courant constant,
- la détection répétée de la ou des positions respectives de l'armature de l'aimant (10, 10a 10b) au moyen d'au moins un capteur de position (40a, 40b, 80a, 80b) jusqu'à ce que, dans chaque cas, une valeur de position constante (p1, p2) ait été fixée comme état stationnaire
- dans lequel un temps de stabilisation est en outre détecté entre le début de l'activation de l'électroaimant (20a, 20b, 20c, 20d) et l'atteinte de l'état stationnaire,
- la fin de l'entraînement de l'électroaimant (20a, 20b, 20c, 20d),
- calculer la course de l'armature causée par chaque électroaimant (20a, 20b, 20c, 20d) comme un changement de position entre la position initiale respective et la valeur de position constante respective (p1, p2) de l'armature de l'aimant (10, 10a, 10b),
- déterminer la valeur d'un courant d'entraînement optimisé pour chaque solénoïde (20a, 20b, 20c, 20d) par un calcul effectué par le dispositif d'entraînement (AV) ou par lecture dans un tableau mémorisé en fonction de la course d'induit détectée,
- le stockage de la valeur du courant d'entraînement optimisé pour le ou les électroaimants (20a, 20b, 20c, 20d) dans une mémoire de données (M) du dispositif d'entraînement (AV).

2. Méthode selon la revendication 1, dans laquelle la caractéristique temporelle d'un courant d'entraînement optimisé est déterminée par calcul ou lecture à partir d'un tableau mémorisé en fonction de la course d'induit déterminée et du temps transitoire détecté.

3. Méthode selon la revendication 1, dans laquelle la méthode est réalisée pendant la fabrication ou le montage initial de l'actionneur à rétroaction (1).

4. Méthode selon la revendication 1, dans laquelle l'actionneur à rétroaction (1) est utilisé dans un véhicule automobile et la méthode est exécutée à chaque démarrage du véhicule.
